# EUROPÄISCHE PATENTSCHRIFT

(11) **EP 0 852 606 B1**
(45) Veröffentlichungstag und Bekanntmachung des Hinweises auf die Patenterteilung: **14.04.1999**
(21) Anmeldenummer: 96934469.6
(22) Anmeldetag: 26.09.1996
(51) Int. Cl.: C08L 83/04, C08K 5/54

(54) **UNTER ABSPALTUNG VON ALKOHOLEN ZU ELASTOMEREN VERNETZBARE ORGANOPOLYSILOXANMASSEN**
ORGANOPOLYSILOXANE COMPOUNDS CROSS-LINKABLE BY CLEAVING OF ALCOHOLS TO FORM ELASTOMERS
MASSES D'ORGANOPOLYSILOXANE RETICULABLES EN ELASTOMERES AVEC SEPARATION D'ALCOOLS

(30) Priorität: 29.09.1995 DE 19536410
(43) Veröffentlichungstag der Anmeldung: 15.07.1998
(73) Patentinhaber: Wacker-Chemie GmbH, 81737 München (DE)
(72) Erfinder: OBERNEDER, Stefan, D-84489 Burghausen (DE); STEPP, Michael, D-84489 Burghausen (DE); PILZWEGER, Erich, D-84387 Julbach (DE); DORSCH, Norman, D-84489 Burghausen (DE)
(74) Vertreter: Budczinski, Angelika
(86) Internationale Anmeldenummer: EP9604210
(87) Internationale Veröffentlichungsnummer: WO9712939

(56) Entgegenhaltungen:
- EP-A- 0 499 407
- FR-A- 2 603 893
- US-A- 4 467 063

## Beschreibung

Die Erfindung betrifft unter Ausschluß von Feuchtigkeit lagerfähige und unter Zutritt von Feuchtigkeit bei Raumtemperatur unter Abspaltung von Alkoholen zu Elastomeren härtende Organopolysiloxanmassen, die sich durch eine besonders hohe Lagerstabilität auszeichnen.

Der Begriff Organopolysiloxane soll im Rahmen der vorliegenden Erfindung dimere, oligomere und polymere Siloxane umfassen.

Organopolysiloxanmassen, die unter Ausschluß von Feuchtigkeit lagerfähig sind und unter Zutritt von Feuchtigkeit bei Raumtemperatur unter Abspaltung von Alkoholen vernetzen, sog. RTV-1-Alkoxymassen, sind bereits seit langem bekannt. Sie bestehen im wesentlichen aus mit Organyloxygruppen terminiertem Siliconpolymer, Vernetzer mit mindestens drei hydrolysierbaren Gruppen, Katalysator und gegebenenfalls Additiven. Der Vorteil dieser RTV-1-Alkoxysysteme ist, daß sie beim Vernetzungsvorgang lediglich geruchlose, neutrale, umweltverträgliche Spaltprodukte - nämlich Alkohole - freisetzen.

Ein wesentlicher Nachteil der RTV-1-Alkoxymassen ist die im Vergleich zu den entsprechenden Essig-, Oxim- und Aminsystemen verringerte Lagerstabilität. Dies bedeutet, daß die RTV-1-Alkoxymasse zwar nach Herstellung in der gewünschten Weise zu einem Elastomer härtet, diese Härtungseigenschaften jedoch bei Lagerung der Massen unter Luftausschluß meist verloren gehen. Nach längerer Lagerzeit beobachtet man deshalb im allgemeinen eine zeitlich verlängerte Aushärtung zu Elastomeren, deren mechanischen Eigenschaften deutlich schlechter als die der anfänglichen Elastomeren sind. Im schlechtesten Fall kann die Aushärtung zu Elastomeren nach Lagerung völlig ausbleiben. Ursache für diese zeitliche Veränderung der Härtung ist häufig die Äquilibrierung von Polymerketten mit freiem, in der Masse gelösten Alkohol unter Katalyse des metallorganischen Kondensationskatalysators, wobei Polymerenden mit einer Alkoxygruppe generiert werden, die für eine Weiterreaktion zu einem Netzwerk unter den Anwendungsbedingungen (Raumtemperatur) zu reaktionsträge sind. Somit bleibt die Vernetzung aus. Der Alkohol für diese unerwünschte Äquilibrierungsreaktion entsteht aus der Reaktion des Alkoxyvernetzers mit Wasser und anderen OH-Gruppen, wie z.B. Silanol-Gruppen, die unvermeidlich bei der Herstellung der RTV-1-Alkoxymassen über das Polymer, den Füllstoff und etwaige andere Additive sowie die Herstellungsweise (Reaktionsgefäß, Herstellung in der Atmosphäre) in die Masse gelangen. Zur Vermeidung der beschriebenen Veränderung der Härtungseigenschaften bei Lagerung der RTV-1-Alkoxymassen wurden daher bereits zahlreiche Versuche unternommen. Hierzu sei beispielsweise auf EP-A 236 042 (Dow Corning Corp.; ausgegeben am 09.09.1987) und DE-A 38 01 389 (Wacker-Chemie GmbH; ausgegeben am 27. Juli 1989) bzw. die entsprechende US-A 4,942,211 verwiesen.

Des weiteren werden in US-A 4,395,526 (General Electric Co.; ausgegeben am 26. Juli 1983) Silane der Formel (R¹O)_{4-a-b}SiR²_{b}Xₐ beansprucht, wobei R¹ und R² Kohlenwasserstoffreste sind, X eine hydrolysierbare Gruppe, ausgewählt aus Amido-, Amino-, Carbamato-, Enoxy-, Imidato-, Isocyanato-, Oximato-, Thioisocyanato- und Ureidorest darstellt mit a gleich 1 bis 4, b gleich 0 bis 3 und a+b gleich 1 bis 4 ist.

In US-A 4,417,042 (General Electric Co.; ausgegeben am 22. November 1983) werden Si-N-haltige Verbindungen in vernetzbaren Massen beschrieben, ausgewählt aus der Gruppe von Silanen der Formel YR³₂Si-NR²-SiR³₂Y mit Y = R³ oder R²₂-N- oder Polymeren aus 3 - 100 mol% Einheiten R²₂N-SiR³₂-O-, R²₂N-SiR³₂-NR²⁻, R²₃Si-NR²-, -SiR³₂-NR²-, =SiR³-NR²⁻, -Si-NR²- und 0 - 97 mol% R³_{c}SiO_{(4-c)/2} mit c = 0, 1, 2, 3.

US-A 4,467,063 (General Electric Co.; ausgegeben am 21. August 1984) offenbart die Verwendung von N-silylsubstituierten Imidazolen R₄₋ₐSiImₐ mit a = 1, 2, 3 oder 4 in vernetzbaren Massen.

Gegenstand der vorliegenden Erfindung sind unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen auf der Basis von
(A) Polydiorganosiloxanen mit mindestens zwei Organyloxyresten an einer jeden Endgruppe,
gegebenenfalls
(B) organyloxyfunktionellen Vernetzern mit mindestens drei Organyloxygruppen
und gegebenenfalls
(C) Kondensationskatalysatoren,
dadurch gekennzeichnet, daß sie mindestens eine
(D) Verbindung enthalten, ausgewählt aus
   (Dₐ) Verbindungen der allgemeinen Formel 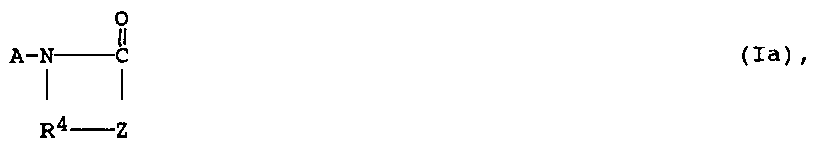
   (D_{b}) Verbindungen mit gegebenenfalls substituiertem 1,2,4-Triazol-1-yl-Rest der Formel 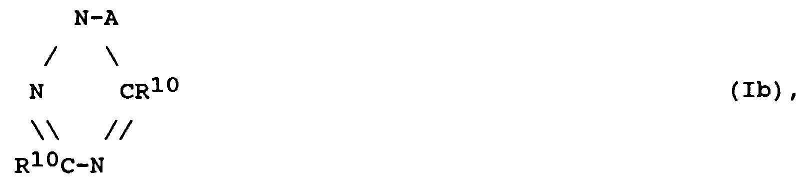
   (D_{c}) Verbindungen mit gegebenenfalls substituiertem Piperazindiyl-Rest der Formel 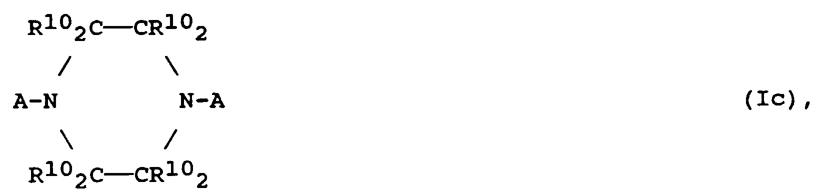
   (D_{d}) O-silylierte, gegebenenfalls substituierte Hydroxypyrimidine
   (Dₑ) Verbindungen der Formel 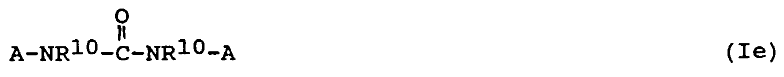 und
   (D_{f}) silylierte, gegebenenfalls substituierte Hydroxy-Purine,
      worin
      - Z: die Bedeutung von =N-A oder -O- hat,
      - R⁴: zweiwertiger gegebenenfalls mit Halogenatomen, Aminogruppen, Ethergruppen oder Estergruppen substituierter Kohlenwasserstoffrest mit 1 bis 16 Kohlenstoffatomen bedeutet,
      - A: gleiche oder verschiedene Reste 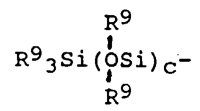 bedeutet, wobei R⁹ gleich oder verschieden sein kann und SiC-gebundene einwertige Kohlenwasserstoffreste mit 1 bis 12 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, sowie Organosiloxyrest bedeutet und c 0 oder eine ganze Zahl von 1 bis 20 ist, und
      - R¹⁰: gleich oder verschieden sein kann und Wasserstoffatom sowie gegebenenfalls mit Halogenatomen, Aminogruppen, Ethergruppen oder Estergruppen substituierte Kohlenwasserstoffreste mit 1 bis 8 Kohlenstoffatomen bedeutet.

Die erfindungsgemäßen Massen können je nach Anwendung standfest oder fließfähig sein.

Bei den erfindungsgemäß eingesetzten Polydiorganosiloxanen mit mindestens zwei Organyloxyresten an einer jeden Endgruppe handelt es sich vorzugsweise um solche der allgemeinen Formel

(R²O)₃₋ₐR¹ ₐSiO-[R₂SiO]ₙ-SiR¹ ₐ(OR²)₃₋ₐ (II),

wobei
- a: 0 oder 1 ist,
- R: gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
- R¹: gleich oder verschieden sein kann und Wasserstoffatom ist oder eine für R angegebene Bedeutung hat,
- R²: gleich oder verschieden sein kann und einen gegebenenfalls mit Amino-, Ester-, Ether-, Keto- oder Halogengruppen substituierten Kohlenwasserstoffrest mit 1 bis 18 Kohlenstoffatomen, der mit Sauerstoffatomen unterbrochen sein kann, bedeutet und
- n: eine ganze Zahl von 10 bis 10 000, bevorzugt 100 bis 3 000, besonders bevorzugt 400 bis 2 000, ist.

Beispiele für Kohlenwasserstoffreste R und R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R und R¹ sind halogenierte Reste, wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest und der 3-(Cyclohexylamino)propylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest, und schwefelfunktionelle Reste, wie der 3-Mercaptopropylrest.

Bevorzugt als Rest R sind unsubstituierte Kohlenwasserstoffreste mit 1 bis 10 Kohlenstoffatomen sowie mit Aminogruppen oder mit Fluorresten substituierte Kohlenwasserstoffreste mit 1 bis 10 Kohlenstoffatomen, wobei der Methylrest besonders bevorzugt ist.

Bevorzugt handelt es sich bei Rest R¹ um Wasserstoffatom, unsubstituierte Kohlenwasserstoffreste mit 1 bis 10 Kohlenstoffatomen sowie um mit Amino-, Mercapto-, Morpholino-, Glycidoxy-, Acryloxy- oder Methacryloxygruppen substituierte Kohlenwasserstoffreste mit 1 bis 10 Kohlenstoffatomen.

Besonders bevorzugt handelt es sich bei Rest R¹ um Alkylreste und Alkenylreste mit 1 bis 4 Kohlenstoffatomen, insbesondere um den Methyl-, Ethyl- und den Vinylrest, sowie um über Alkylenreste mit 2 bis 6 Kohlenstoffatomen mit dem Siliciumatom verbundene, gegebenenfalls substituierte Amino- und Glycidoxygruppen.

Beispiele für unsubstituierte Kohlenwasserstoffreste R¹ sind die für R angegebenen Kohlenwasserstoffreste.

Beispiele für substituierte Kohlenwasserstoffreste R¹ sind der 3-(2-Aminoethylamino)propylrest, der 3-(Cyclohexylamino)propylrest, der 3-(Glycidoxy)propylrest, 3-(N,N-Diethyl-2-aminoethylamino)propylrest, 3-(Butylamino)propylrest und 3-(3-Methoxypropylamino)propylrest.

Bevorzugt handelt es sich bei Rest R² um Alkylreste mit 1 bis 8 Kohlenstoffatomen, die mit Methoxy- oder Ethoxygruppen substituiert sein können, wobei Methyl- oder Ethylreste besonders bevorzugt sind.

Beispiele für Alkylreste R² sind die oben für R angegebenen Beispiele für Alkylreste.

Der durchschnittliche Wert für die Zahl n in Formel (II) ist vorzugsweise so gewählt, daß das Organopolysiloxan der Formel (II) eine Viskosität von 1 000 bis 1 000 000 mm²/s, besonders bevorzugt von 5 000 bis 500 000 mm²/s, jeweils gemessen bei einer Temperatur von 25°C, besitzt.

Obwohl in Formel (II) nicht angegeben bzw. aus der Bezeichnung Polydiorganosiloxan nicht entnehmbar, können bis zu 10 Molprozent der Diorganosiloxaneinheiten durch andere, meist jedoch nur als mehr oder weniger schwer vermeidbare Verunreinigungen vorliegende Siloxaneinheiten, wie R₃SiO_{1/2}-, RSiO_{3/2}- und SiO_{4/2}-Einheiten, ersetzt sein, wobei R die vorstehend dafür angegebene Bedeutung hat.

Beispiele für die in den erfindungsgemäßen Massen eingesetzten Polydiorganosiloxane mit mindestens zwei Organyloxyresten an einer jeden Endgruppe (A) sind
(MeO)₂MeSiO[SiMe₂O]₂₀₀₋₂₀₀₀SiMe(OMe)₂,
(EtO)₂MeSiO[SiMe₂O]₂₀₀₋₂₀₀₀SiMe(OEt)₂,
(MeO)₂ViSiO[SiMe₂O]₂₀₀₋₂₀₀₀SiVi(OMe)₂,
(EtO)₂ViSiO[SiMe₂O]₂₀₀₋₂₀₀₀SiVi(OEt)₂,
(MeO)₂CapSiO[SiMe₂O]₂₀₀₋₂₀₀₀SiCap(OMe)₂,
(MeO)₂BapSiO[SiMe₂O]₂₀₀₋₂₀₀₀SiBap(OMe)₂ und
(EtO)₂BapSiO[SiMe₂O]₂₀₀₋₂₀₀₀SiBap(OEt)₂,
wobei Me Methylrest, Et Ethylrest, Vi Vinylrest, Cap 3-(Cyclohexylamino)propylrest und Bap 3-(n-Butylamino)propylrest bedeutet.

Bei dem erfindungsgemäß eingesetzten Organopolysiloxan (A) kann es sich um eine einzelne Art wie auch um ein Gemisch aus mindestens zwei Arten derartiger Organopolysiloxane handeln.

Die in den erfindungsgemäßen Massen eingesetzten Polydiorganosiloxane mit mindestens zwei Organyloxyresten an einer jeden Endgruppe sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den gegebenenfalls eingesetzten organyloxyfunktionellen Vernetzern (B) kann es sich um beliebige, bisher bekannte Organyloxyvernetzer handeln, wie beispielsweise Silane oder Siloxane mit mindestens drei Organyloxygruppen sowie cyclische Silane gemäß DE-A 36 24 206 (Wacker-Chemie GmbH; ausgegeben am 11. Februar 1988) bzw. der entsprechenden US-A 4,801,673 der Formel 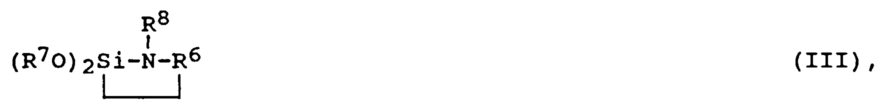 worin
- R⁶: einen zweiwertigen Kohlenwasserstoffrest bedeutet,
- R⁷: gleich oder verschieden sein kann und ein für R² angegebene Bedeutung hat und
- R⁸: Wasserstoffatom, einen Alkyl- oder einen Aminoalkylrest bedeutet.

Bei den in den erfindungsgemäßen Massen gegebenenfalls eingesetzten Organyloxyvernetzern (B) handelt es sich vorzugsweise um Organosilciumverbindungen der Formel

(R²O)₄₋ₘSiR³ ₘ (IV),

wobei
- R²: gleich oder verschieden sein kann und eine der oben angegebenen Bedeutungen hat,
- R³: eine oben für R¹ genannte Bedeutung besitzt oder einen mit dem Rest -SiR¹_{b}(OR²)_{3-b} substituierten Kohlenwasserstoffrest darstellt mit R¹ und R² gleich der obengenannten Bedeutung und b gleich 0, 1, 2 oder 3 und
- m: 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Handelt es sich bei den in den erfindungsgemäßen Massen gegebenenfalls eingesetzten Vernetzern (B) um Teilhydrolysate von Organosiliciumverbindungen der Formel (IV), so sind solche mit bis zu 6 Siliciumatomen bevorzugt.

Beispiele für Rest R³ sind die oben für Rest R¹ genannten Beispiele sowie mit Resten -SiR¹_{b}(OR²)_{3-b} substituierte Kohlenwasserstoffreste mit 1 bis 6 Kohlenstoffatomen, wobei b gleich 0 oder 1 ist und R² die obengenannte Bedeutung hat.

Bevorzugte Reste R³ sind die für R¹ bevorzugt genannten Reste sowie mit Resten -SiR¹_{b}(OR²)_{3-b} substituierte Kohlenwasserstoffreste mit 1 bis 6 Kohlenstoffatomen, wobei b gleich 0 oder 1 ist und R² die obengenannte Bedeutung hat.

Besonders bevorzugte Reste R³ sind die für R¹ besonders bevorzugt genannten Reste sowie mit Resten -Si(OR²)₃ substituierte Kohlenwasserstoffreste mit 2 Kohlenstoffatomen, wobei R² = Ethyl- oder Methylrest bedeutet.

Besonders bevorzugt handelt es sich bei den in den erfindungsgemäßen Massen gegebenenfalls eingesetzten Vernetzern (B) um Tetramethoxysilan, Tetraethoxysilan, Methyltrimethoxysilan, Methyltriethoxysilan, Vinyltrimethoxysilan, Vinyltriethoxysilan, Phenyltrimethoxysilan, Phenyltriethoxysilan, 3-Aminopropyltrimethoxysilan, 3-Aminopropyltriethoxysilan, 3-Cyanopropyltrimethoxysilan, 3-Cyanopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, 3-(Glycidoxy)propyltriethoxysilan, 1,2-Bis(trimethoxysilyl)ethan, 1,2-Bis(triethoxysilyl)ethan sowie Teilhydrolysate der genannten alkoxyfunktionellen Organosiliciumverbindungen, wie z.B. Hexaethoxydisiloxan.

Bei dem erfindungsgemäß gegebenenfalls eingesetzten Vernetzer (B) kann es sich um eine einzelne Art wie auch um ein Gemisch aus mindestens zwei Arten derartiger Organyloxyvernetzer handeln.

Die in den erfindungsgemäßen Massen eingesetzten Vernetzer (B) sind handelsübliche Produkte bzw. können nach in der Siliciumchemie bekannten Verfahren hergestellt werden.

Die erfindungsgemäßen Massen enthalten Vernetzer (B) in Mengen von vorzugsweise 0 bis 50 Gewichtsteilen, besonders bevorzugt 0,1 bis 20 Gewichtsteilen, insbesondere 0,5 bis 10 Gewichtsteilen, jeweils bezogen auf 100 Gewichtsteile Organopolysiloxan (A).

Es können die erfindungsgemäßen Massen beliebige Kondensationskatalysatoren (C) enthalten, die auch bisher in unter Ausschluß von Wasser lagerfähigen, bei Zutritt von Wasser bei Raumtemperatur zu Elastomeren vernetzenden Massen vorliegen konnten. Dazu gehören alle in der eingangs genannten DE-A 38 01 389 erwähnten Kondensationskatalysatoren, wie etwa Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

=SiOSn=

bzw. durch SnC-gebundene, einwertige organische Reste abgesättigt sind.

Bevorzugte Kondensationskatalysatoren (C) sind metallorganische Kondensationskatalysatoren, insbesondere Derivate des Titans, Aluminiums, Zinns sowie Calciums und Zinks, wobei Dialkylzinnverbindungen sowie Zinkdicarboxylate besonders bevorzugt sind.

Beispiele für bevorzugte metallorganische Kondensationskatalysatoren sind die in US-A 4,517,337 (General Electric Co.; ausgegeben am 14. Mai 1985) beschriebenen Dialkyldi(β-diketo)stannate, Dialkylzinndicarboxylate, Calcium- und Zinkdicarboxylate sowie Butyltitanchelatverbindungen.

Beispiele für besonders bevorzugte metallorganische Kondensationskatalysatoren sind Dibutylzinndiacetat, Dibutylzinndilaurat, Dibutylzinndi(2-ethylhexanoat) und Zinkdi(2-ethylhexanoat).

Bei den in den erfindungsgemäßen Massen gegebenenfalls eingesetzten Kondensationskatalysatoren (C) kann es sich um eine einzelne Art oder um ein Gemisch aus mindestens zwei Arten derartiger Kondensationskatalysatoren handeln.

Die erfindungsgemäßen Massen enthalten Kondensationskatalysator (C) in Mengen von vorzugsweise 0 bis 10 Gewichtsteilen, besonders bevorzugt 0,01 bis 5 Gewichtsteilen, insbesondere 0,1 bis 4 Gewichtsteilen, jeweils bezogen auf 100 Gewichtsteile Organopolysiloxan (A).

Beispiele für Reste R⁴ sind der Methylen-, 1,2-Ethylen-, 1,3-Propylen-, 1,4-Butylen-, Methyl-1,2-ethylen-, 1-Methyl-1,3-propylen-, 2-Methyl-1,3-propylen-, 2,2-Dimethyl-1,3-propylen- und 2-Ethyl-1,3-propylenrest.

R⁴ bedeutet vorzugsweise einen Rest -(CR⁵₂)_{y}-, wobei R⁵ gleich oder verschieden sein kann und Wasserstoffatom oder Kohlenwasserstoffrest mit 1 bis 4 Kohlenstoffatomen bedeutet und y eine ganze Zahl von 1 bis 8, bevorzugt 2, 3 oder 4, ist, wobei R⁴ besonders bevorzugt die Bedeutung von 1,2-Ethylenrest und 1,3-Propylenrest hat.

Besonders bevorzugt handelt es sich bei Rest R⁵ um Wasserstoffatom oder den Methylrest, insbesondere um Wasserstoffatom. Beispiele für Rest R⁵ sind die für R oben angegebenen Beispiele für Kohlenwasserstoffreste mit 1 bis 4 Kohlenstoffatomen.

Beispiele für R⁹ sind die für R angegebenen Beispiele für gegebenenfalls substituierte Kohlenwasserstoffreste mit 1 bis 12 Kohlenstoffatomen sowie Organosiloxyreste, wie der Trimethylsiloxyrest, der Triethylsiloxyrest, der Dimethylphenylsiloxyrest, der (CH₃)₃SiO-[Si(CH₃)₂O]₃-Rest und der (CH₃)₃SiO-[Si(CH₃)₂O]₄-Rest.

Bevorzugt handelt es sich bei R⁹ um Kohlenwasserstoffreste mit 1 bis 12 Kohlenstoffatomen, besonders bevorzugt um den Methylrest.

Der Wert für c ist bevorzugt 0 oder eine ganze Zahl von 1 bis 10, besonders bevorzugt 0 oder eine ganze Zahl von 1 bis 4, insbesondere 0.

Beispiele für Rest A sind der Trimethylsilylrest, Triethylsilylrest, Dimethylphenylsilylrest, Dimethylvinylsilylrest, (CH₃)₃Si[OSi(CH₃)₂]₃-Rest, (CH₃)₂(CH₂=CH)Si[OSi(CH₃)₂]₃-Rest, (CH₃)₃Si[OSi(CH₃)₂]₄-Rest und [3-(N,N-Diethylaminoethylamino)propyl](CH₃)₂Si[OSi(CH₃)₂]₃-Rest.

Bevorzugt handelt es sich bei Rest A um den Trimethylsilylrest, (CH₃)₃Si[OSi(CH₃)₂]₃-Rest, (CH₃)₂(CH₂=CH)Si[OSi(CH₃)₂]₃-Rest und (CH₃)₃Si[OSi(CH₃)₂]₄-Rest, wobei der Trimethylsilylrest besonders bevorzugt ist.

Beispiele für R¹⁰ sind die für R angegebenen Beispiele für gegebenenfalls substituierte Kohlenwasserstoffreste mit 1 bis 8 Kohlenstoffatomen.

Bevorzugt handelt es sich bei Rest R¹⁰ um Wasserstoffatom und Kohlenwasserstoffreste mit 1 bis 6 Kohlenstoffatomen, besonders bevorzugt um Wasserstoffatom.

Beispiele für Verbindungen (Dₐ) gemäß Formel (Ia) mit Z gleich -O- sind gegebenenfalls substituierte 3-Trimethylsilyl-1,3-Oxazolidin-2-one, wie z.B. solche der Formel 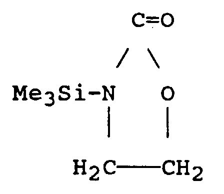 wobei Me Methylrest bedeutet.

Beispiele für Verbindungen (Dₐ) gemäß Formel (Ia) mit Z gleich =N-A sind gegebenenfalls substituierte 1,3-Bis(trimethylsilyl)-Imidazolidin-2-one, wie z.B. solche der Formel 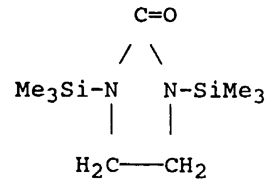 wobei Me Methylrest bedeutet.

Beispiele für Verbindungen (D_{b}) gemäß Formel (Ib) sind gegebenenfalls substituierte l-Trimethylsilyl-1,2,4-Triazole, wie z.B. solche der Formel 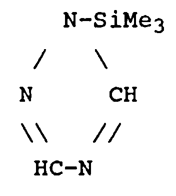 wobei Me Methylrest bedeutet.

Beispiele für Verbindungen (D_{c}) gemäß Formel (Ic) sind gegebenenfalls substituierte 1,4-Bis(trimethylsilyl)piperazine, wie z.B. solche der Formel 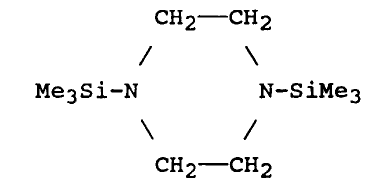 wobei Me Methylrest bedeutet.

Beispiele für O-silylierte, gegebenenfalls substituierte Hydroxypyrimidine (D_{d}) sind Verbindungen gemäß Formel 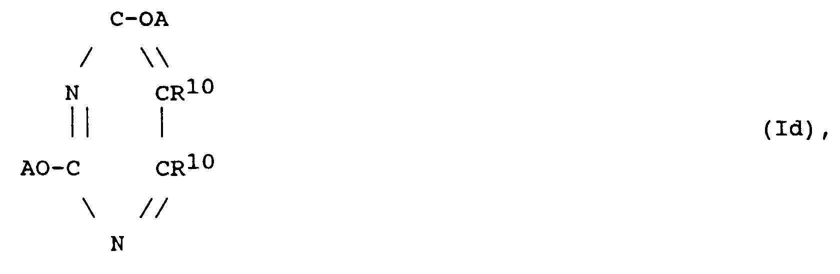 wobei A und R¹⁰ eine der obengenannten Bedeutungen haben, wie z.B. Bis(O-trimethylsilyl)uracil, Bis(O-trimethylsilyl)thymin und Tris(O-trimethylsilyl)barbitursäure 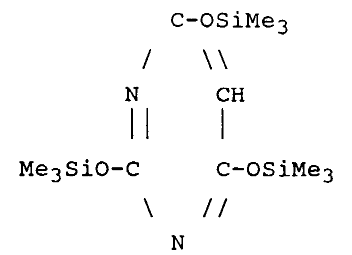 wobei Me Methylrest bedeutet.

Beispiele für Verbindungen (Dₑ) gemäß Formel (Ie) sind gegebenenfalls substituierte N,N`-Bis(trimethylsilyl)ureylene, wie z.B. solche der Formeln 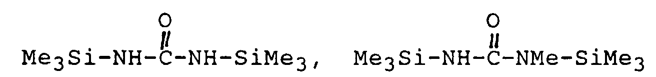 und 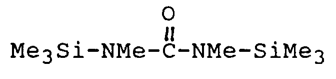 wobei Me Methylrest bedeutet.

Beispiele für silylierte, gegebenenfalls substituierte Hydroxy-Purine (D_{f}) sind Tetrakis(trimethylsilyl)harnsäure und Verbindungen gemäß Formel 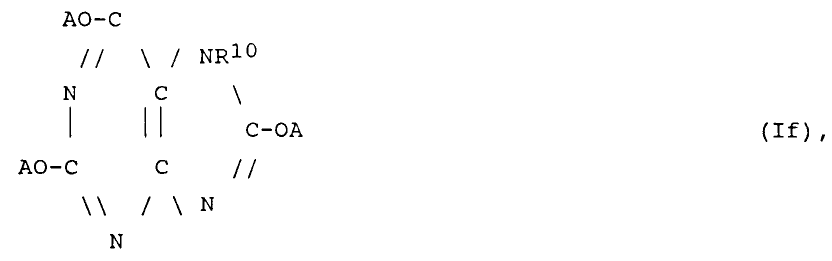 wobei A und R¹⁰ eine der obengenannten Bedeutungen haben, wie z.B. 2,6,8-Tris(O-trimethylsilyl)harnsäure 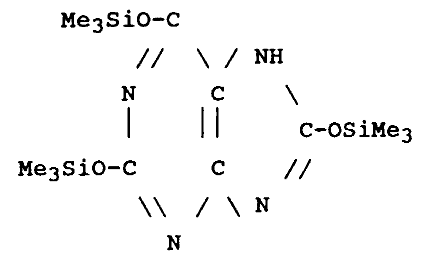 mit Me gleich Methylrest.

Enthält eine der Verbindungen gemäß Formeln (Ia) bis (If) mehr als einen Rest A pro Molekül, so haben die Reste A in diesem Molekül vorzugsweise die gleiche Bedeutung.

Vorzugsweise handelt es sich bei der erfindungsgemäß eingesetzten Komponente (D) um N-Trimethylsilyl-2-oxazolidinon, N,N-Bis(trimethylsilyl)-2-imidazolidinon, (CH₃)₂(CH₂=CH)Si[OSi(CH₃)₂]₃-NH-CO-NH-[(CH₃)₂SiO]₃Si(CH=CH₂) (CH₃)₂ und (CH₃)₃Si-NH-CO-NH-Si(CH₃)₃.

Die Verbindungen (Dₐ) bis (D_{f}) sind handelsübliche Produkte bzw. nach in der Literatur beschriebenen und in der Siliziumchemie gängigen Verfahren herstellbar.

Bei der in den erfindungsgemäßen Massen eingesetzten Komponente (D) kann es sich um eine einzelne Art oder um ein Gemisch aus mindestens zwei Arten derartiger Verbindungen handeln.

Die erfindungsgemäßen Massen enthalten Verbindung (D) in Mengen von vorzugsweise 0,1 bis 10 Gewichtsteilen, besonders bevorzugt 0,5 bis 6 Gewichtsteilen, insbesondere 0,5 bis 5 Gewichtsteilen, jeweils bezogen auf 100 Gewichtsteile Organopolysiloxan (A).

Zusätzlich zu den oben beschriebenen Komponenten (A), (B), (C) und (D) können die erfindungsgemäßen Massen nun weitere Stoffe, wie Weichmacher (E), Füllstoffe (F), Haftvermittler (G) und Additive (H) enthalten, wobei die zusätzlichen Stoffe (E) bis (H) die gleichen sein können, die auch bisher in unter Abspaltung von Alkoholen vernetzbaren Massen eingesetzt worden sind.

Beispiele für Weichmacher (E) sind bei Raumtemperatur flüssige, durch Trimethylsiloxygruppen endblockierte Dimethylpolysiloxane sowie hochsiedende Kohlenwasserstoffe, wie zum Beispiel Paraffinöle.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Organopolysiloxanmassen eingesetzten Haftvermittler (G) sind Silane und Organopolysiloxane mit funktionellen Gruppen, wie beispielsweise solche mit Aminoalkyl-, Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Fungicide, Oxydationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Bei den einzelnen Bestandteilen (E), (F), (G) und (H) der erfindungsgemäßen unter Abspaltung von Alkoholen vernetzbaren Organopolysiloxanmassen kann es sich jeweils um eine Art derartiger Bestandteile wie auch um ein Gemisch aus mindestens zwei Arten derartiger Bestandteile handeln.

Bevorzugt handelt es sich bei den erfindungsgemäßen Massen um solche, die
(A) Polydiorganosiloxan der Formel (II),
(B) Vernetzer,
(C) Kondensationskatalysator,
(D) eine oder mehrere der Verbindungen, ausgewählt aus (Dₐ) bis (D_{f}), sowie
gegebenenfalls weitere Stoffe
enthalten.

Besonders bevorzugt handelt es sich bei den erfindungsgemäßen Massen um solche, die aus
(A) 100 Gewichtsteilen Polydiorganosiloxan der Formel (II),
(B) 0,1 bis 50 Gewichtsteilen Vernetzer der Formel (IV),
(C) 0,01 bis 10 Gewichtsteilen metallorganischen Kondensationskatalysator,
(D) 0,1 bis 10 Gewichtsteilen Verbindung, ausgewählt aus (Dₐ) bis (D_{f}),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa erfolgen. Falls erwünscht, kann dieses Vermischen aber auch bei höheren Temperaturen erfolgen, z.B. bei Temperaturen im Bereich von 35°C bis 135°C.

Die Herstellung der erfindungsgemäßen Organopolysiloxanmassen und deren Lagerung muß unter im wesentlichen wasserfreien Bedingungen erfolgen, da ansonsten die Massen vorzeitig aushärten können.

Für die Vernetzung der erfindungsgemäßen Massen zu Elastomeren reicht der übliche Wassergehalt der Luft aus. Die Vernetzung kann, falls erwünscht, auch bei höheren oder niedrigeren Temperaturen als Raumtemperatur, z.B. bei -5° bis 10°C oder bei 30° bis 50°C durchgeführt werden.

Die erfindungsgemäßen unter Abspaltung von Alkoholen zu Elastomeren vernetzbaren Organopolysiloxanmassen haben den Vorteil, daß sie sich durch eine sehr hohe Lagerstabilität und eine hohe Vernetzungsgeschwindigkeit auszeichnen. So zeigen die erfindungsgemäßen Massen bei einer Lagerung von mindestens 18 Monaten bei Raumtemperatur zu jedem Zeitpunkt ein konstantes Vulkanisationsverhalten.

Des weiteren haben die erfindungsgemäßen Massen den Vorteil, daß die Verbindungen (Dₐ) bis (D_{f}) mit OH-Gruppen, insbesondere mit Alkohol und/oder Wasser und/oder Si-OH-Gruppen, bereits bei Raumtemperatur reagieren. Verbindungen mit OH-Gruppen sind dabei in RTV-Alkoxymassen hauptsächlich Wasser, das mit den Rezepturbestandteilen wie etwa dem Polysiloxan oder den Füllstoffen in die Masse eingeschleppt wird, Alkohole, die sich bei der Endblockierung der OH-Polymere sowie der Umsetzung von Si-OH-Gruppen oder Wasser mit Vernetzer bilden, sowie Si-OH-Gruppen an Polysiloxanen und vor allem an der als Füllstoff gegebenenfalls eingesetzten Kieselsäure. Dabei werden vorteilhafterweise keine ökologisch bedenklichen oder geruchsbelästigenden, flüchtigen Spaltprodukte freigesetzt.

Ein weiterer Vorteil der erfindungsgemäßen Massen ist die Tatsache, daß die eingesetzten Verbindungen (D) synthetisch einfach zugänglich und somit ökonomisch herzustellen sind.

Die erfindungsgemäßen bzw. erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Organopolysiloxanmassen eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

In den folgenden Beispielen wird Shore-A-Härte nach DIN (Deutsche Industrie Norm) bestimmt.

### Beispiel 1

Zu 53 g eines α,ω-Bis(dimethoxymethyl)polydimethylsiloxans der Viskosität 80 000 mm²/s werden 28 g eines α,ω-Bis(trimethylsiloxy) polydimethylsiloxans der Viskosität 0,1 mPa·s, 1,6 g Methyltrimethoxysilan sowie 1 g 3-Aminopropyltriethoxysilan (käuflich erhältlich unter der Bezeichnung "Silan GF 93" bei der Wacker-Chemie GmbH) gemischt. Anschließend werden 4 g 3-Trimethylsilyl-2-oxazolidinon (käuflich erhältlich bei der Fa. ABCR, D-Karlsruhe) in die Masse eingerührt sowie 0,3 g Dibutylzinndiacetat (käuflich erhältlich bei der Fa. Acima, CH-Buchs) zugegeben. Zuletzt werden 12 g pyrogene, oberflächenbehandelte Kieselsäure mit einer spezifischen Oberfläche nach BET von 150 m²/g (käuflich erhältlich unter dem Markennamen "WACKER HDK" H15 bei der Wacker-Chemie GmbH) homogen in die Masse eingearbeitet.

Die so hergestellte Masse wird in Tuben luftdicht abgefüllt und bei 50°C gelagert.

Unmittelbar nach der Herstellung sowie nach 2, 4, 8 und 12 Wochen Lagerung wird
a) anhand von Raupen die Hautbildungszeit (Zeit bis zur Ausbildung einer trockenen Oberfläche der Raupe) ermittelt; dabei wird diejenige Zeit bestimmt, die zwischen dem Aufbringen der Raupe und dem Zeitpunkt verstreicht, bei dem bei Berührung der Raupenoberfläche mit einem Bleistift keine Masse mehr an dem Bleistift anhaftet; sowie
b) die Shore-A-Härte anhand von 2 mm dicken Folien ermittelt; die Folien werden dadurch erzeugt, daß die jeweilige Masse mit einer Spachtel auf eine Oberfläche aus Polytetrafluorethylen aufgetragen und der Luftfeuchtigkeit ausgesetzt wird. Zwei Wochen nach dem Auftragen wird der entstandene trockene Film untersucht.

Die Ergebnisse sind in Tabelle 1 zusammengefaßt.

### Beispiel 2

Die in Beispiel 1 beschriebene Arbeitsweise wird wiederholt mit der Abänderung, daß anstelle der 4 g 3-Trimethylsilyl-2-oxazolidinon 4 g 1-Trimethylsilyl-1,2,4-triazol (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird wie in Beispiel 1 beschrieben anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 3

Die in Beispiel 1 beschriebene Arbeitsweise wird wiederholt mit der Abänderung, daß anstelle der 4 g 3-Trimethylsilyl-2-oxazolidinon 4 g Bis-N,N'-(trimethylsilyl)piperazin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 4

Die in Beispiel 1 beschriebene Arbeitsweise wird wiederholt mit der Abänderung, daß anstelle der 4 g 3-Trimethylsilyl-2-oxazolidinon 4 g Bis(O-trimethylsilyl)uracil (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 5

Die in Beispiel 1 beschriebene Arbeitsweise wird wiederholt mit der Abänderung, daß anstelle der 4 g 3-Trimethylsilyl-2-oxazolidinon 4 g N,N'-Bis(trimethylsilyl)harnstoff (käuflich erhältlich unter der Bezeichnung "Silan BSU" bei der Wacker-Chemie GmbH) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 6

### A) Herstellung von Tetrakis(trimethylsilyl)harnsäure

50,4 Teile Harnsäure (käuflich erhältlich bei der Firma Aldrich, D-Steinheim) werden zusammen mit 300 Teilen Hexamethyldisilazan (käuflich erhältlich unter der Bezeichnung "Silan HMN" bei der Wacker-Chemie GmbH) und 0,2 Teilen Ammoniumsulfat solange unter Rückfluß gekocht, bis die anfängliche Ammoniakentwicklung beendet ist (ca. 6 Stunden). Die über Nacht auskristallisierte Verbindung wird im Vakuumtrockenschrank bei 10 mbar und 70°C 2 Stunden getrocknet. Der so erhaltene weiße Feststoff weist einen Schmelzpunkt von 117°C auf. Mittels ¹H-NMR, ²⁹Si-NMR und IR-Spektren sowie Elementaranalyse wird das Produkt als gewünschte Verbindung identifiziert:

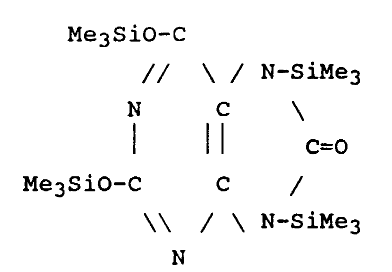

Die in Beispiel 1 beschriebene Arbeitsweise wird wiederholt mit der Abänderung, daß anstelle der 4 g 3-Trimethylsilyl-2-oxazolidinon 4 g Tetrakis(trimethylsilyl)harnsäure, deren Herstellung oben unter A) beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 7

### A) Herstellung von N,N`-Bis(trimethylsilyl)-2-imidazolidinon

Eine Mischung aus 6 Mol 2-Imidazolidinon (käuflich erhältlich bei der Firma Aldrich, D-Steinheim), 7,2 Mol Hexamethyldisilazan (käuflich erhältlich unter der Bezeichnung "Silan HMN" bei der Wacker-Chemie GmbH) und 11 mMol Ammoniumsulfat wird unter Rühren 3 bis 4 Stunden unter Rückfluß gekocht, bis die anfängliche Ammoniakentwicklung beendet ist. Nach Abziehen des überschüssigen Hexamethyldisilazans erhält man nahezu quantitativ das gewünschte Produkt als gelblich kristallinen Feststoff.

Die in Beispiel 1 beschriebene Arbeitsweise wird wiederholt mit der Abänderung, daß anstelle der 4 g 3-Trimethylsilyl-2-oxazolidinon 4 g N,N`-Bis(trimethylsilyl)-2-imidazolidinon, dessen Herstellung oben unter A) beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 8

Die in Beispiel 1 beschriebene Arbeitsweise wird wiederholt mit der Abänderung, daß anstelle der 4 g 3-Trimethylsilyl-2-oxazolidinon 4 g Bis(O-trimethylsilyl)-thymin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 9

### A) Herstellung von N,N`-Bis(trimethylsilyl)tetrahydropyrimidinon

In einem Kolben mit Rückflußkühler werden 10 Teile Tetrahydro-2-pyrimidinon (käuflich erhältlich bei der Firma Aldrich, D-Steinheim) und 35,5 Teile Hexamethyldisilazan (käuflich erhältlich unter der Bezeichnung "Silan HMN" bei der Wacker-Chemie GmbH) unter Katalyse mit 0,5 g Ammoniumsulfat 2 Stunden unter Rückfluß gekocht, bis die anfängliche Ammoniakentwicklung beendet ist. Nach Abziehen des überschüssigen Hexamethyldisilazans im Vakuum erhält man das gewünschte Produkt als weißen Feststoff.

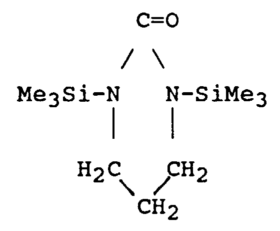

Die in Beispiel 1 beschriebene Arbeitsweise wird wiederholt mit der Abänderung, daß anstelle der 4 g 3-Trimethylsilyl-2-oxazolidinon 4 g N,N`-Bis(trimethylsilyl)tetrahydropyrimidinon, dessen Herstellung oben unter A) beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

### Beispiel 10

### A) Herstellung von N,N`-Bis(trimethylsilyl)-N,N`-dimethylharnstoff

Zu 44 Teile N,N`-Dimethylharnstoff (käuflich erhältlich bei der Firma Aldrich, D-Steinheim) in 180 Teilen Triethylamin (käuflich erhältlich bei der Firma Merck, D-Darmstadt) werden innerhalb von 20 Minuten 144 Teile Trimethylchlorsilan (käuflich erhältlich unter der Bezeichnung "Silan M3" bei der Wacker-Chemie GmbH) zugetropft, wobei die Reaktionstemperatur nicht über 30°C steigt. Danach wird 24 Stunden bei Raumtemperatur gerührt. Das erhaltene Reaktionsgemisch filtriert man und wäscht den Rückstand (Triethylammoniumchlorid) mit Toluol nach. Vom Filtrat wird bei 60°C und 70 mbar Triethylamin und Toluol abgezogen. Die verbleibende Flüssigkeit destilliert man bei 10 Torr. Die Fraktion bei 92 - 96°C ist laut ¹H- und ²⁹Si-NMR das gewünschte Produkt.

Die in Beispiel 1 beschriebene Arbeitsweise wird wiederholt mit der Abänderung, daß anstelle der 4 g 3-Trimethylsilyl-2-oxazolidinon 4 g N,N`-Bis(trimethylsilyl)-N,N`-dimethylharnstoff, dessen Herstellung oben unter A) beschrieben ist, in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 1 zusammengefaßt.

**Tabelle 1:**

| | | | | | | | | | | |
|---|---|---|---|---|---|---|---|---|---|---|
| Wo: Wochen; | | | | | | | | | | |
| HBZ: Hautbildungszeit in Minuten; | | | | | | | | | | |
| Sh-A: Shore-A-Härte; | | | | | | | | | | |
| * : nicht bestimmt; | | | | | | | | | | |

| Beispiel | nach Herstellung | | nach 2 Wo Lagerung | | nach 4 Wo Lagerung | | nach 8 Wo Lagerung | | nach 12 Wo Lagerung | |
|---|---|---|---|---|---|---|---|---|---|---|
| | HBZ | Sh-A | HBZ | Sh-A | HBZ | Sh-A | HBZ | Sh-A | HBZ | Sh-A |
| 1 | 40 | 23 | 50 | 22 | 52 | 25 | 60 | 23 | 65 | 23 |
| 2 | 75 | 22 | 30 | 23 | 34 | 19 | 70 | 17 | 110 | 18 |
| 3 | 50 | 24 | 95 | 22 | 115 | 23 | 115 | 22 | 105 | 20 |
| 4 | 110 | 18 | 110 | 20 | 120 | 22 | 120 | 19 | 120 | 17 |
| 5 | 11 | * | 9 | 10 | 5 | 11 | 9 | 10 | 20 | 13 |
| 6 | 9 | 12 | 15 | 24 | 15 | 21 | 17 | 23 | 15 | 22 |
| 7 | 30 | 17 | 45 | 15 | 42 | 16 | 45 | 15 | 50 | 15 |
| 8 | 200 | 19 | 190 | 20 | 195 | 18 | 160 | 20 | 120 | 19 |
| 9 | 1 5 | 1 22 | 7 | 25 | 8 | 25 | 10 | 24 | 9 | 22 |
| 10 | 20 | 21 | 10 | 23 | 13 | 21 | 13 | 22 | 12 | 23 |

### Vergleichsbeispiel 1

Die in Beispiel 1 beschriebene Arbeitsweise wird wiederholt mit der Abänderung, daß anstelle der 4 g 3-Trimethylsilyl-2-oxazolidinon 4 g N,N-Bis(trimethylsilyl)methylamin (käuflich erhältlich bei der Fa. Fluka, CH-Buchs) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 2

Die in Beispiel 1 beschriebene Arbeitsweise wird wiederholt mit der Abänderung, daß anstelle der 4 g 3-Trimethylsilyl-2-oxazolidinon 4 g N-Trimethylsilylmorpholin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 3

Die in Beispiel 1 beschriebene Arbeitsweise wird wiederholt mit der Abänderung, daß anstelle der 4 g 3-Trimethylsilyl-2-oxazolidinon 4 g N,O-Bis(trimethylsilyl)hydroxylamin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 4

Die in Beispiel 1 beschriebene Arbeitsweise wird wiederholt mit der Abänderung, daß anstelle der 4 g 3-Trimethylsilyl-2-oxazolidinon 4 g 2-(Trimethylsilyloxy)furan (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 5

Die in Beispiel 1 beschriebene Arbeitsweise wird wiederholt mit der Abänderung, daß anstelle der 4 g 3-Trimethylsilyl-2-oxazolidinon 4 g Trimethylsilylpyrrolidin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 6

Die in Beispiel 1 beschriebene Arbeitsweise wird wiederholt mit der Abänderung, daß anstelle der 4 g 3-Trimethylsilyl-2-oxazolidinon 4 g Trimethylsilylacetonitril (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 7

Die in Beispiel 1 beschriebene Arbeitsweise wird wiederholt mit der Abänderung, daß anstelle der 4 g 3-Trimethylsilyl-2-oxazolidinon 4 g Bis(trimethylsilyl)carbodiimid (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 8

Die in Beispiel 1 beschriebene Arbeitsweise wird wiederholt mit der Abänderung, daß anstelle der 4 g 3-Trimethylsilyl-2-oxazolidinon 4 g Trimethylsilylpiperidin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 9

Die in Beispiel 1 beschriebene Arbeitsweise wird wiederholt mit der Abänderung, daß anstelle der 4 g 3-Trimethylsilyl-2-oxazolidinon 4 g Tris(trimethylsilyl)ketenimin (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 10

Die in Beispiel 1 beschriebene Arbeitsweise wird wiederholt mit der Abänderung, daß anstelle der 4 g 3-Trimethylsilyl-2-oxazolidinon 4 g Tris(trimethylsilyl)phosphat (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 11

Die in Beispiel 1 beschriebene Arbeitsweise wird wiederholt mit der Abänderung, daß anstelle der 4 g 3-Trimethylsilyl-2-oxazolidinon 4 g Trimethylsilylmethacrylat (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 12

Die in Beispiel 1 beschriebene Arbeitsweise wird wiederholt mit der Abänderung, daß anstelle der 4 g 3-Trimethylsilyl-2-oxazolidinon 4 g 2-Trimethylsilylethanol (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 13

Die in Beispiel 1 beschriebene Arbeitsweise wird wiederholt mit der Abänderung, daß anstelle der 4 g 3-Trimethylsilyl-2-oxazolidinon 4 g Bis(trimethylsilyl)acetamid (käuflich erhältlich bei der Fa. Wacker-Chemie GmbH unter dem Namen "Silan BSA") in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 14

Die in Beispiel 1 beschriebene Arbeitsweise wird wiederholt mit der Abänderung, daß anstelle der 4 g 3-Trimethylsilyl-2-oxazolidinon 4 g Ethyltrimethylsilylacetat (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 15

Die in Beispiel 1 beschriebene Arbeitsweise wird wiederholt mit der Abänderung, daß anstelle der 4 g 3-Trimethylsilyl-2-oxazolidinon 4 g N-Methyl-N-trimethylsilylacetamid (käuflich erhältlich bei der Fa. Fluka, CH-Buchs) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

### Vergleichsbeispiel 16

Die in Beispiel 1 beschriebene Arbeitsweise wird wiederholt mit der Abänderung, daß anstelle der 4 g 3-Trimethylsilyl-2-oxazolidinon 4 g (Isopropenyloxy)trimethylsilan (käuflich erhältlich bei der Fa. ABCR, D-Karlsruhe) in die Masse eingerührt werden.

Die so hergestellte Masse wird in Tuben luftdicht abgefüllt und bei 50°C gelagert.

Unmittelbar nach der Herstellung sowie nach 2, 4, 8 und 12 Wochen Lagerung wird anhand von Raupen die Hautbildungszeit (Zeit bis zur Ausbildung einer trockenen Oberfläche der Raupe) sowie die Shore-A-Härte anhand von 2 mm dicken Folien ermittelt. Die Ergebnisse sind in Tabelle 2 zusammengefaßt.

**Tabelle 2:**

| | | | | | | | | | | |
|---|---|---|---|---|---|---|---|---|---|---|
| Wo: Wochen; | | | | | | | | | | |
| HBZ: Hautbildungszeit in Minuten; | | | | | | | | | | |
| Sh-A: Shore-A-Härte; | | | | | | | | | | |
| k.V.: keine Vulkanisation innerhalb von 7 Tagen; | | | | | | | | | | |

| Beispiel V=Vergleich | nach Herstellung | | nach 2 Wo Lagerung | | nach 4 Wo Lagerung | | nach 8 Wo Lagerung | | nach 12 Wo Lagerung | |
|---|---|---|---|---|---|---|---|---|---|---|
| | HBZ | Sh-A | HBZ | Sh-A | HBZ | Sh-A | HBZ | Sh-A | HBZ | Sh-A |
| V1 | 20 | 21 | 60 | 18 | 6000 | - | k.V. | - | k.V. | - |
| V2 | 15 | 19 | 70 | 20 | 20 | - | k.V. | - | k.V. | - |
| V3 | 25 | 22 | 6000 | - | 6000 | - | k.V. | - | k.V. | - |
| V4 | 70 | 19 | 60 | 21 | 120 | 20 | 300 | 15 | 500 | 10 |
| V5 | 45 | 23 | 80 | 18 | 120 | 15 | 300 | 10 | 1000 | 7 |
| V6 | 30 | 20 | 150 | 17 | 210 | 16 | 400 | 13 | 320 | 10 |
| V7 | 200 | 5 | 250 | 5 | 300 | 4 | 450 | - | 190 | - |
| V8 | 40 | 24 | 85 | 15 | 120 | 13 | 420 | 10 | 1000 | 6 |
| V9 | 180 | 13 | 300 | 15 | 800 | 14 | 280 | 13 | 380 | 10 |
| V10 | k.V. | - | k.V. | - | k.V. | - | k.V. | - | k.V. | - |
| V11 | 65 | 10 | 240 | 6 | 800 | 4 | k.V. | - | k.V. | - |
| V12 | 11 | 30 | k.V. | - | k.V. | - | k.V. | - | k.V. | - |
| V13 | 60 | 22 | 40 | 23 | 50 | 20 | 30 | 17 | k.V. | - |
| V14 | 60 | 24 | 30 | 19 | k.V. | - | k.V. | - | k.V. | - |
| V15 | 35 | 25 | 30 | 23 | 20 | 20 | k.V. | - | k.V. | - |
| V16 | 25 | 21 | 20 | - | k.V. | - | k.V. | - | k.V. | - |

## Patentansprüche

1. Unter Ausschluß von Feuchtigkeit lagerfähige und bei Zutritt von Feuchtigkeit bei Raumtemperatur unter Abspaltung von Alkoholen zu Elastomeren vernetzbare Organopolysiloxanmassen auf der Basis von
(A) Polydiorganosiloxanen mit mindestens zwei Organyloxyresten an einer jeden Endgruppe,
gegebenenfalls
(B) organyloxyfunktionellen Vernetzern mit mindestens drei Organyloxygruppen
und gegebenenfalls
(C) Kondensationskatalysatoren,
dadurch gekennzeichnet, daß sie mindestens eine
(D) Verbindung enthalten, ausgewählt aus
(Dₐ) Verbindungen der allgemeinen Formel 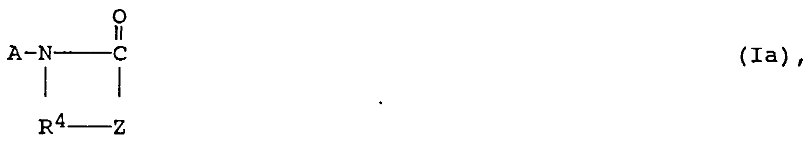
(D_{b}) Verbindung mit gegebenenfalls substituiertem 1,2,4-Triazol-1-yl-Rest der Formel 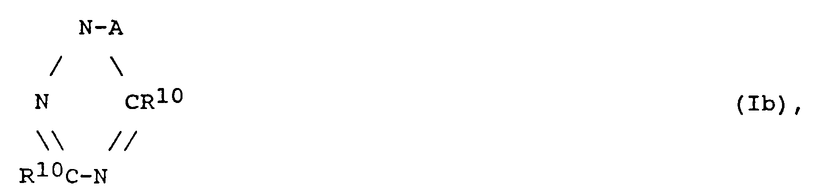
(D_{c}) Verbindungen mit gegebenenfalls substituiertem Piperazindiyl-Rest der Formel 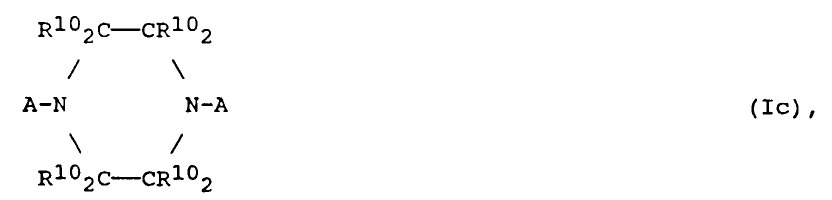
(D_{d}) O-silylierte, gegebenenfalls substituierte Hydroxypyrimidine
(Dₑ) Verbindungen der Formel 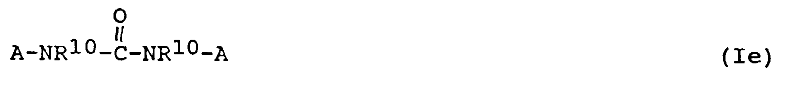 und
(D_{f}) silylierte, gegebenenfalls substituierte Hydroxy-Purine, worin
Z die Bedeutung von =N-A oder -O- hat,
R⁴ zweiwertiger gegebenenfalls mit Halogenatomen, Aminogruppen, Ethergruppen oder Estergruppen substituierter Kohlenwasserstoffrest mit 1 bis 16 Kohlenstoffatomen bedeutet und
A gleich oder verschiedene Reste 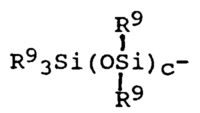 bedeutet, wobei R⁹ gleich oder verschieden sein kann und SiC-gebundene einwertige Kohlenwasserstoffreste mit 1 bis 12 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, sowie organosiloxyrest bedeutet und c 0 oder eine ganze Zahl von 1 bis 20 ist,
R¹⁰ gleich oder verschieden sein kann und Wasserstoffatom sowie gegebenenfalls mit Halogenatomen, Aminogruppen, Ethergruppen oder Estergruppen substituierte Kohlenwasserstoffreste mit 1 bis 8 Kohlenstoffatomen bedeutet.

2. Organopolysiloxanmassen gemäß Anspruch 1, dadurch gekennzeichnet, daß es sich bei den Polydiorganosiloxanen mit mindestens zwei Organyloxyresten an einer jeden Endgruppe um solche der allgemeinen Formel
(R²O)₃₋ₐR¹ ₐSiO-[R₂SiO]ₙ-SiR¹ ₐ(OR²)₃₋ₐ (II)
handelt, wobei
a 0 oder 1 ist,
R gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
R¹ gleich oder verschieden sein kann und Wasserstoffatom ist oder eine für R angegebene Bedeutung hat,
R² gleich oder verschieden sein kann und einen gegebenenfalls mit Amino-, Ester-, Ether-, Keto- und Halogengruppen substituierten Kohlenwasserstoffrest mit 1 bis 18 Kohlenstoffatomen, der mit Sauerstoffatomen unterbrochen sein kann, bedeutet und
n eine ganze Zahl von 10 bis 10 000 ist.

3. Organopolysiloxanmassen gemäß Anspruch 1 oder 2, dadurch gekennzeichnet, daß es sich bei den O-silylierten, gegebenenfalls substituierten Hydroxypyrimidinen (D_{d}) um Verbindungen der Formel 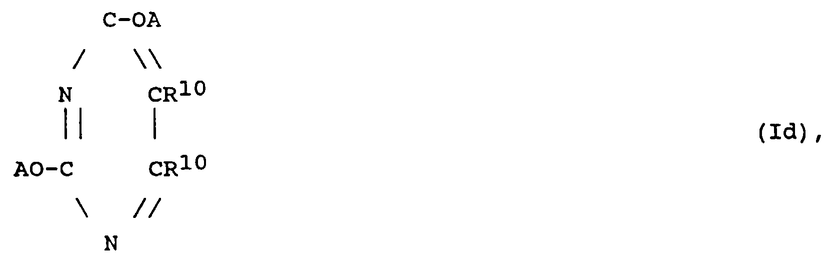 handelt, wobei A und R¹⁰ eine der obengenannten Bedeutungen haben.

4. Organopolysiloxanmassen gemäß einem oder mehreren der Ansprüche 1 bis 3, dadurch gekennzeichnet, daß es sich bei den silylierten, gegebenenfalls substituierten Hydroxy-Purinen (D_{f}) um Verbindungen gemäß Formel 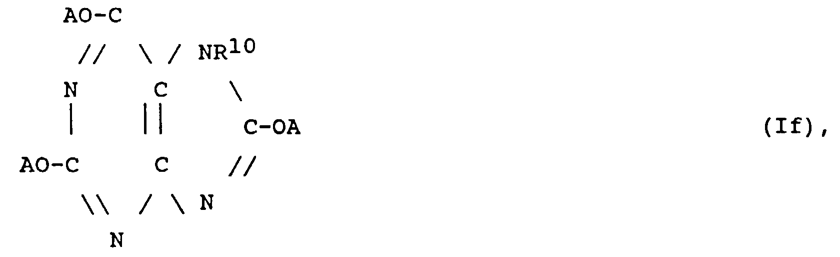 handelt, wobei A und R¹⁰ eine der obengenannten Bedeutungen haben.

5. Organopolysiloxanmassen gemäß einem oder mehreren der Ansprüche 1 bis 4, dadurch gekennzeichnet, daß es sich bei den Verbindungen (D) um N-Trimethylsilyl-2-oxazolidinon, N,N-Bis(trimethylsilyl)-2-imidazolidinon, (CH₃)₂(CH₂=CH)Si[OSi(CH₃)₂]₃-NH-CO-NH-[(CH₃)₂SiO]₃-Si(CH=CH₂)(CH₃)₂ und (CH₃)₃Si-NH-CO-NH-Si(CH₃)₃ handelt.

6. Organopolysiloxanmassen gemäß einem oder mehreren der Ansprüche 1 bis 5, dadurch gekennzeichnet, daß sie Verbindung (D) in Mengen von 0,1 bis 10 Gewichtsteilen, bezogen auf 100 Gewichtsteile Organopolysiloxan (A), enthalten.

7. Organopolysiloxanmassen gemäß einem oder mehreren der Ansprüche 1 bis 6, dadurch gekennzeichnet, daß es sich um solche handelt, die
(A) Polydiorganosiloxan der Formel (II),
(B) Vernetzer,
(C) Kondensationskatalysator,
(D) eine oder mehrere der Verbindungen, ausgewählt aus (Dₐ) bis (D_{f}), sowie
gegebenenfalls weitere Stoffe
enthalten.

8. Organopolysiloxanmassen gemäß einem oder mehreren der Ansprüche 1 bis 7, dadurch gekennzeichnet, daß es sich um solche handelt, die aus
(A) 100 Gewichtsteilen Polydiorganosiloxan der Formel (II),
(B) 0,1 bis 50 Gewichtsteilen Vernetzer der Formel (IV),
(C) 0,01 bis 10 Gewichtsteilen metallorganischen Kondensationskatalysator,
(D) 0,1 bis 10 Gewichtsteilen Verbindung, ausgewählt aus (Dₐ) bis (D_{f}),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

9. Verfahren zur Herstellung der Organopolysiloxanmassen gemäß einem oder mehreren der Ansprüche 1 bis 8, dadurch gekennzeichnet, daß Komponenten (A) und (D) sowie gegebenenfalls (B), (C), (E), (F), (G) und (H) in beliebiger Reihenfolge miteinander vermischt werden.

10. Elastomere hergestellt durch Vernetzung der Organopolysiloxanmassen gemäß einem oder mehreren der Ansprüche 1 bis 8.

## Claims

1. Organopolysiloxane compositions which can be stored in the absence of moisture and which are crosslinkable to form elastomers in the presence of moisture at room temperature with the elimination of alcohols, said compositions being based on
(A) polydiorganosiloxanes with at least two organyloxy radicals on each end group,
if appropriate
(B) organyloxy-functional crosslinking agents with at least three organyloxy groups
and if appropriate
(C) condensation catalysts,
characterized in that they comprise at least one compound
(D) selected from
(Dₐ) compounds of the general formula 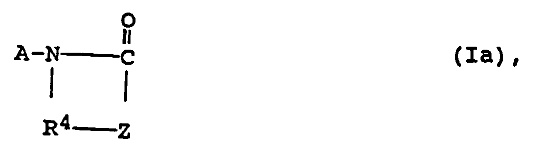
(D_{b}) compounds with a substituted or unsubstituted 1,2,4-triazol-1-yl radical of the formula 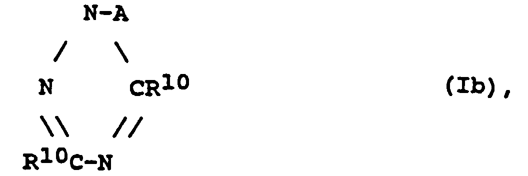
(D_{c}) compounds with a substituted or unsubstituted piperazinediyl radical of the formula 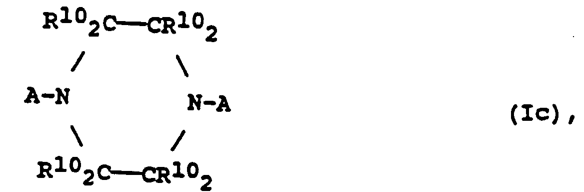
(D_{d}) O-silylated substituted or unsubstituted hydroxypyrimidines
(Dₑ) compounds of the formula 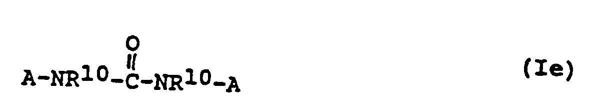 and
(D_{f}) silylated substituted or unsubstituted hydroxypurines, in which
Z is =N-A or -O-,
R⁴ is a divalent hydrocarbon radical having 1 to 16 carbon atoms which is unsubstituted or substituted by halogen atoms, amino groups, ether groups or ester groups,
A are identical or different radicals 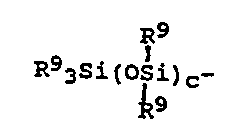 in which R⁹ can be identical or different and are SiC-bonded monovalent hydrocarbon radicals having 1 to 12 carbon atoms which are unsubstituted or substituted by halogen atoms, amino groups, ether groups, ester groups, epoxy groups, mercapto groups, cyano groups or (poly)glycol radicals, the latter being made up of oxyethylene and/or oxypropylene units, or an organosiloxy radical and c is 0 or an integer from 1 to 20, and
R¹⁰ can be identical or different and is a hydrogen atom or hydrocarbon radicals having 1 to 8 carbon atoms which are unsubstituted or substituted by halogen atoms, amino groups, ether groups or ester groups.

2. Organopolysiloxane compositions according to Claim 1, characterized in that the polydiorganosiloxanes with at least two organyloxy radicals on each end group are those of the general formula
(R²O)₃₋ₐR¹ ₐSiO-[R₂SiO]ₙ-SiR¹ ₐ(OR²)₃₋ₐ (II),
in which
a is 0 or 1,
R are identical or different SiC-bonded hydrocarbon radicals having 1 to 18 carbon atoms which are unsubstituted or substituted by halogen atoms, amino groups, ether groups, ester groups, epoxy groups, mercapto groups, cyano groups or (poly)glycol radicals, the latter being made up of oxyethylene and/or oxypropylene units,
R¹ can be identical or different and are a hydrogen atom or have one of the meanings indicated for R,
R² can be identical or different and are a hydrocarbon radical having 1 to 18 carbon atoms which is unsubstituted or substituted by amino, ester, ether, keto and halogen groups and which can be interrupted by oxygen atoms, and
n is an integer from 10 to 10,000.

3. Organopolysiloxane compositions according to Claim 1 or 2, characterized in that the O-silylated substituted or unsubstituted hydroxypyrimidines (D_{d}) are compounds of the formula 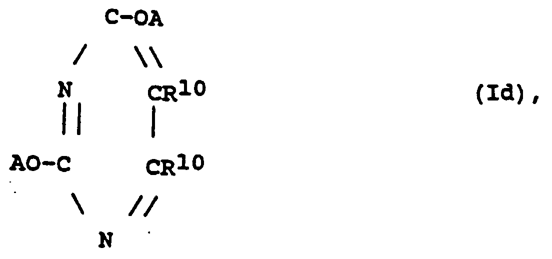 in which A and R¹⁰ have one of the meanings given above.

4. Organopolysiloxane compositions according to one or more of Claims 1 to 3, characterized in that the silylated substituted or unsubstituted hydroxypurines (D_{f}) are compounds of the formula 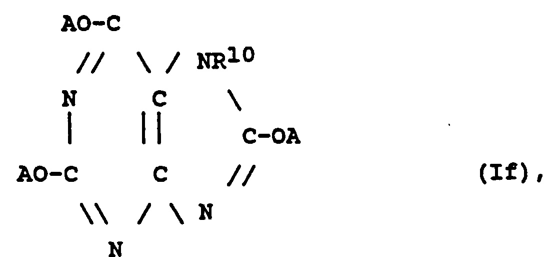 in which A and R¹⁰ have one of the meanings given above.

5. Organopolysiloxane compositions according to one or more of claims 1 to 4, characterized in that the compounds (D) are N-trimethylsilyl-2-oxazolidinone, N,N-bis(trimethylsilyl)-2-imidazolidinone, (CH₃)₂(CH₂=CH)Si[OSi(CH₃)₂]₃-NH-CO-NH-[(CH₃)₂SiO]₃Si(CH=CH₂)(CH₃)₂ and (CH₃)₃Si-NH-CO-NH-Si(CH₃)₃.

6. Organopolysiloxane compositions according to one or more of Claims 1 to 5, characterized in that they contain compound (D) in amounts of 0.1 to 10 parts by weight, based on 100 parts by weight of organopolysiloxane (A).

7. Organopolysiloxane compositions according to one or more of Claims 1 to 6, characterized in that they are those which contain
(A) polydiorganosiloxane of the formula (II),
(B) crosslinking agent,
(C) condensation catalyst,
(D) one or more compounds selected from (Dₐ) to (D_{f}), and
other substances if appropriate.

8. Organopolysiloxane compositions according to one or more of Claims 1 to 7, characterized in that they are those which consist of
(A) 100 parts by weight of polydiorganosiloxane of the formula (II),
(B) 0.1 to 50 parts by weight of crosslinking agent of the formula (IV),
(C) 0.01 to 10 parts by weight of metalorganic condensation catalyst,
(D) 0.1 to 10 parts by weight of a compound selected from (Dₐ) to (D_{f}),
(E) 0 to 300 parts by weight of plasticizers,
(F) 0 to 300 parts by weight of fillers,
(G) 0 to 50 parts by weight of coupling agents and
(H) 0 to 100 parts by weight of additives.

9. Process for the preparation of the organo-polysiloxane compositions according to one or more of Claims 1 to 8, characterized in that components (A) and (D), and (B), (C), (E), (F), (G) and (H) if appropriate, are mixed together in any order.

10. Elastomers prepared by crosslinking the organo-polysiloxane compositions according to one or more of Claims 1 to 8.

## Revendications

1. Compositions d'organopolysiloxane, pouvant être stockées en l'absence d'humidité et réticulables à température ambiante en présence d'humidité pour former des élastomères avec élimination d'alcools, à base
(A) de polydiorganosiloxanes comportant au moins deux radicaux organyloxy sur chaque groupement terminal;
le cas échéant,
(B) des agents réticulants à fonctionnalité organyloxy comportant au moins trois groupements organyloxy et,
le cas échéant,
(C) des catalyseurs de condensation,
caractérisées en ce qu'elles contiennent au moins un composé (D), sélectionné parmi
(Dₐ) des composés de formule générale 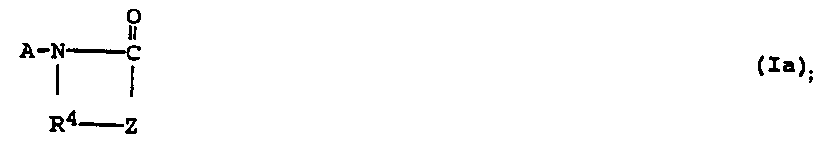
(D_{b}) un composé comportant un radical 1,2,4-triazole-1-yle, substitué le cas échéant, de formule 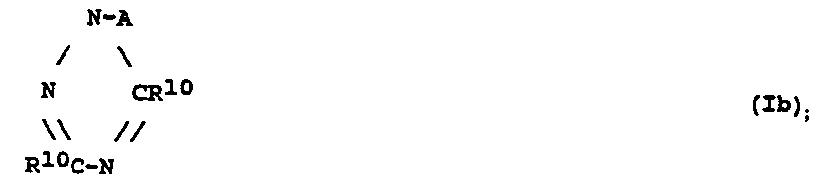
(D_{c}) des composés comportant un radical pipérazinediyle, substitué le cas échéant, de formule 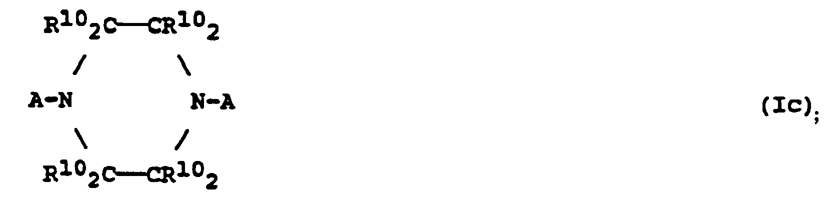
(D_{d}) des hydroxypyrimidines O-silylées, substituées le cas échéant;
(Dₑ) des composés de formule 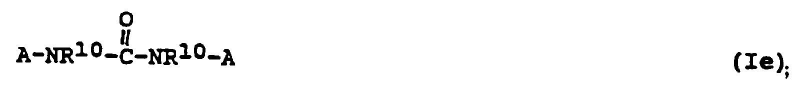 et
(D_{f}) des hydroxypurines silylées substituées le cas échéant, dans lesquelles
Z signifie =N-A ou -O-;
R⁴ signifie un radical hydrocarboné divalent avec 1 à 16 atomes de carbone, substitué le cas échéant avec des atomes d'halogène, des groupements amino, des groupements éther ou des groupements ester;
A signifie des radicaux identiques ou différents 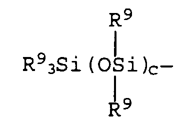 dans lesquels R⁹ peut être identique ou différent et signifie des radicaux hydrocarbonés avec 1 à 12 atomes de carbone, monovalents à liaison SiC, qui sont substitués le cas échéant par des atomes d'halogène, des radicaux amino, des radicaux éther, des radicaux ester, des radicaux époxy, des radicaux mercapto, des radicaux cyano ou des radicaux (poly)glycol, ces derniers étant formés d'unités oxyéthylène et/ou oxypropylène, ainsi qu'un radical organosiloxy, et c est 0 ou un nombre entier de 1 à 20, et
R¹⁰ peut être identique ou différent et signifie un atome d'hydrogène ainsi que des radicaux hydrocarbonés avec 1 à 8 atomes de carbone qui sont substitués le cas échéant par des atomes d'halogène, des radicaux amino, des radicaux éther ou des radicaux ester.

2. Compositions d'organopolysiloxane suivant la revendication 1, caractérisées en ce que les polydiorganosiloxanes comportant au moins deux radicaux organyloxy sur chaque groupement terminal sont ceux de formule générale
(R²O)₃₋ₐR¹ ₐSiO-[R₂SiO]ₙ-SiR¹ ₐ(OR²)₃₋ₐ (II),
dans laquelle
a est 0 ou 1;
R signifie des radicaux hydrocarbonés identiques ou différents avec 1 à 18 atomes de carbone, à liaison SiC, qui sont substitués le cas échéant avec des atomes d'halogène, des radicaux amino, des radicaux éther, des radicaux ester, des radicaux époxy, des radicaux mercapto, des radicaux cyano ou des radicaux poly(glycol), ces derniers étant formés d'unités oxyéthylène et/ou oxypropylène;
R¹ peut être identique ou différent et est un atome d'hydrogène ou a une signification donnée pour R;
R² peut être identique ou différent et signifie un radical hydrocarboné avec 1 à 18 atomes de carbone, substitué le cas échéant avec des radicaux amino, ester, éther, céto et halogène, qui peut être interrompu par des atomes d'oxygène, et
n est un nombre entier de 10 à 10 000.

3. Compositions d'organopolysiloxane suivant la revendication 1 ou 2, caractérisées en ce que les hydroxypyrimidines o-silylées substituées le cas échéant (D_{d}) sont des composés de formule 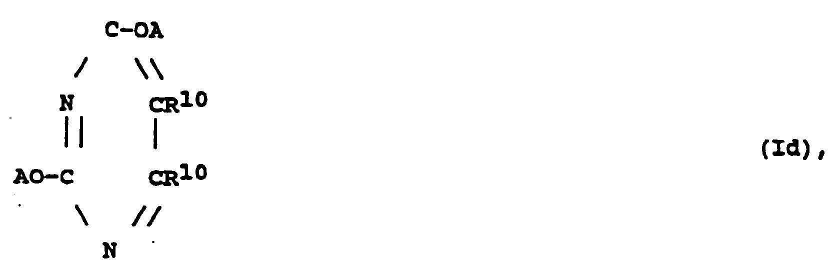 dans laquelle A et R¹⁰ ont une des significations données ci-dessus.

4. Compositions d'organopolysiloxane suivant une ou plusieurs des revendications 1 à 3, caractérisées en ce que les hydroxypurines silylées substituées le cas échéant (D_{f}) sont des composés de formule 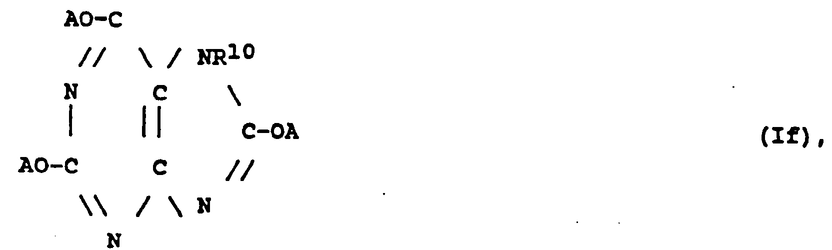 dans laquelle A et R¹⁰ ont une des significations données ci-dessus.

5. Compositions d'organopolysiloxane suivant une ou plusieurs des revendications 1 à 4, caractérisées en ce que les composés (D) sont la N-triméthylsilyl-2-oxazolidinone, la N,N-bis(triméthylsilyl)-2-imidazolidinone, (CH₃)₂(CH₂=CH)Si[OSi(CH₃)₂]₃-NH-CO-NH[(CH₃)₂-SiO]₃Si(CH=CH₂)(CH₃)₂ et (CH₃)₃Si-NH-CO-NH-Si(CH₃)₃.

6. Compositions d'organopolysiloxane suivant une ou plusieurs des revendications 1 à 5, caractérisées en ce qu'elles contiennent le composé (D) en des quantités de 0,1 à 10 parties en poids, sur la base de 100 parties en poids d'organopolysiloxane (A).

7. Compositions d'organopolysiloxane suivant une ou plusieurs des revendications 1 à 6, caractérisées en ce qu'elles sont celles qui contiennent
(A) un polydiorganosiloxane de formule (II);
(B) un agent réticulant;
(C) un catalyseur de condensation;
(D) un ou plusieurs des composés choisis parmi (Dₐ) à (D_{f}), et
le cas échéant d'autres substances.

8. Compositions d'organopolysiloxane suivant une ou plusieurs des revendications 1 à 7, caractérisées en ce qu'elles sont celles qui sont composées
(A) de 100 parties en poids de polydiorganosiloxane de formule (II);
(B) de 0,1 à 50 parties en poids d'agent réticulant de formule (IV);
(C) de 0,01 à 10 parties en poids de catalyseur organométallique de condensation;
(D) de 0,1 à 10 parties en poids de composé choisi parmi (Dₐ) à (D_{f});
(E) de 0 à 300 parties en poids de plastifiants;
(F) de 0 à 300 parties en poids de charges;
(G) de 0 à 50 parties en poids d'agents adhésifs, et
(H) de 0 à 100 parties en poids d'additifs.

9. Procédé de préparation des compositions d'organopolysiloxane suivant l'une ou plusieurs des revendications 1 à 8, caractérisé en ce que les composants (A) et (D), ainsi que le cas échéant (B), (C), (E), (F), (G) et (H), sont mélangés les uns avec les autres dans n'importe quel ordre.

10. Elastomères préparés par réticulation des compositions d'organopolysiloxane suivant une ou plusieurs des revendications 1 à 8.
